# FASCICULE DE BREVET EUROPEEN

(11) **EP 2 870 286 B1**
(45) Date de publication et mention de la délivrance du brevet: **31.01.2018**
(21) Numéro de dépôt: 13744697.7
(22) Date de dépôt: 05.07.2013
(51) Int. Cl.: D21H 17/28, D21H 19/54, C08B 30/18, C08L 3/12, C09D 103/12

(54) **SAUCES DE COUCHAGE POUR PAPIER ET CARTON CONTENANT UNE DEXTRINE A TENEUR ELEVEE EN AMYLOPECTINE**
STREICHMASSEN FÜR PAPIER UND KARTON MIT EINEM DEXTRIN MIT HOHEM AMYLOPECTINGEHALT
COATING SLIPS FOR PAPER AND CARDBOARD CONTAINING A DEXTRIN WITH A HIGH AMYLOPECTIN CONTENT

(30) Priorité: 06.07.2012 FR 1256542
(43) Date de publication de la demande: 13.05.2015
(73) Titulaire: Roquette Frères, 62136 Lestrem (FR)
(72) Inventeur: BOUXIN, Christian, F-59274 Marquillies (FR); ONIC, Ludivine, F-62136 Lestrem (FR); PAJARI, Timo, FI-02620 Espoo (FI)
(74) Mandataire: Cabinet Plasseraud
(86) Numéro de dépôt international: PCT/FR2013/051604
(87) Numéro de publication internationale: WO 2014/006346

(56) Documents cités:
- WO-A1-99/64467

## Description

La présente invention se rapporte à de nouvelles sauces de couchage contenant une dextrine à teneur élevée en amylopectine. De manière avantageuse, lorsque cette dextrine est mise en oeuvre sous forme de colle, elle confère à ladite colle une excellente stabilité. Lorsque la colle est ensuite incorporée dans la sauce de couchage, elle permet d'en réguler la viscosité Brookfield, tout en fournissant un bon compromis entre rétention d'eau et comportement rhéologique sous haut gradient de cisaillement.

La présente invention se rapporte donc à une sauce de couchage contenant dans une certaine proportion une dextrine riche en amylopectine. Elle concerne également l'utilisation de cette dextrine pour fabriquer ladite sauce. Elle vise également un procédé de fabrication d'un papier ou d'un carton, revêtu sur au moins une de ces faces par une sauce selon l'invention. Elle englobe enfin les papiers et les cartons ainsi obtenus.

Dans le cadre de la fabrication d'une feuille de papier ou d'un carton par couchage, on réalise une opération d'enduction consistant à déposer à la surface du support une formulation complexe dénommée « sauce de couchage ». Celle-ci contient de l'eau, au moins un pigment ou une charge minérale, au moins un liant naturel ou synthétique, ainsi que divers autres additifs choisis notamment parmi un dispersant, un modificateur de rhéologie, un azurant optique, un anti-mousse, etc...

Le liant, comme son nom l'indique, a pour fonction première d'assurer la cohésion des différents ingrédients au sein de la sauce. Historiquement, on a mis en oeuvre des produits d'origine synthétique, comme des latex acryliques ou de type styrène-butadiène. Plus récemment, on a cherché à remplacer ces produits issus de la pétrochimie par des solutions d'origine végétale. A la lueur des taux de liant mis en oeuvre dans les sauces de couchage (pouvant atteindre 25 % du poids total de la matière sèche), on comprend que cette problématique de remplacement des latex synthétiques soit devenue un enjeu majeur pour l'industrie papetière.

L'état de la technique est extrêmement riche en solutions d'origine naturelle, notamment à base d'amidon ou de ses dérivés, qui permettent de remplacer au moins en partie le latex synthétique initialement contenu dans la sauce de couchage. Il convient avant tout d'examiner le cahier des charges technique qui préside à la validation d'une solution de substitution d'origine naturelle.

Parmi les contraintes imposées à l'homme du métier, la première est sans doute celle de la stabilité du produit sous forme de colle, à savoir de l'amidon ou de ses dérivés mis en suspension dans l'eau à un extrait sec généralement compris entre 25 % et 45 % en poids. Cette stabilité peut être appréhendée de manière visuelle, mais également de manière plus précise à travers une mesure de viscoélasticité (détermination des modules élastique et visqueux), ou encore par une mesure de la viscosité Brookfield, selon les méthodes bien connues de l'homme du métier. C'est cette dernière méthode qu'on privilégie dans la présente Demande.

De manière classique, l'expérience consiste à chauffer un lait d'amidon pour obtenir une colle puis à mesurer sa viscosité Brookfield au cours de son refroidissement : on observe alors une augmentation de la viscosité due à la diminution de la température. Une brusque ou forte augmentation de la viscosité (ou « rupture de pente » si on considère la courbe relative à la viscosité en fonction de la température) est caractéristique de la « rétrogradation » de l'amidon. Ce phénomène désigne la tendance qu'ont les macromolécules d'amylose à se réassocier entre elles au cours du refroidissement de la colle, par formation de liaisons hydrogène.

Plus particulièrement, il est important de ne pas observer une telle rétrogradation à une température de l'ordre de 60°C, température à laquelle la colle est incorporée dans la sauce de couchage. Dans la présente Demande, on parlera de colle « stable » ou de dextrine conférant un comportement « stable » à la colle dans laquelle elle est utilisée, lorsqu'on n'observera pas de brusque ou forte évolution de la viscosité Brookfield au cours du refroidissement de ladite colle.

Une fois la sauce de couchage réalisée, c'est-à-dire après mélange entre les liants naturel et synthétique, la charge et le pigment, l'eau et les autres additifs, apparaissent de nouvelles contraintes techniques liées à la mise en oeuvre de ladite sauce.

Parmi elles, on peut citer l'aptitude de la sauce à être aisément transportée, transvasée et manipulée, opérations tout à fait courantes dans une unité de production papetière. On peut convenir qu'une valeur de viscosité Brookfield (à 25 °C et 100 tours par minute) comprise entre environ 500 mPa.s et 1500 mPa.s correspond à une rhéologie compatible avec les exigences de manipulation de la sauce. Cette valeur de viscosité peut, le cas échéant, être ajustée au moyen d'agents épaississants.

Par la suite, la sauce de couchage est destinée à être appliquée à la surface du papier ou du carton. Au moment de l'application, notamment lors d'un couchage où l'épaisseur de sauce déposée est contrôlée par une lame, la sauce subit des contraintes de cisaillement très importantes. Plus la viscosité résultante est élevée, plus la pression à exercer sur la lame doit être importante ; des pressions trop élevées sont à l'origine de débordements de sauces connus sous les termes de « baves » ou de « perles ». Inversement, si on parvient à réduire cette pression de lame, on pourra avantageusement augmenter la vitesse de couchage du papier, et aboutir à un rendement amélioré.

C'est notamment à travers une mesure de viscosité dite ACAV, qu'on parvient à appréhender la rhéologie de la sauce sous haut gradient de cisaillement. On vise donc ici une viscosité la plus faible possible.

Enfin, après dépôt, la sauce présente une tendance naturelle à transférer dans la feuille de papier tout ou partie de l'eau et des parties hydrosolubles qu'elle contient. Il faut contrôler une migration trop rapide qui nuirait aux caractéristiques physiques et optiques de la couche déposée. On cherche donc à retenir l'eau dans la sauce de couchage : on parle de rétention d'eau. Cette dernière peut être déterminée à travers la méthode dite Gradek bien connue de l'homme du métier ; plus la valeur obtenue est faible, meilleure est la rétention d'eau.

Or, travaillant à la recherche de solutions naturelles en vue de remplacer au moins en partie les latex synthétiques dans les sauces de couchage, la Demanderesse est parvenue à mettre au point de nouvelles compositions dont une des spécificités repose sur la présence de dextrines présentant un taux d'amylopectine important.

De manière tout à fait surprenante, les colles formulées avec les dextrines selon la présente invention qui possèdent des masses moléculaires en poids élevées (supérieures à 600 000 Da) présentent une stabilité au moins aussi importante que les colles réalisées avec des amidons commerciaux de masses moléculaires plus faibles, et une stabilité améliorée par rapport à des colles formulées avec des dextrines de masses moléculaires moins importantes.

En outre, on montre que les sauces selon la présente invention offrent un meilleur compromis entre stabilité, comportement sous fort cisaillement et rétention d'eau, que les solutions de l'art antérieur. Selon une variante préférée de l'invention correspondant à une sélection sur les masses moléculaires, ce compromis peut être optimisé de manière à dépasser très largement les niveaux de performance de l'art antérieur.

Par dextrine au sens de la présente invention, on entend un amidon modifié en phase sèche, par action de la chaleur, emploi d'un réactif chimique, par action de rayonnements ionisants et les combinaisons de ces différents moyens. Dans d'autres termes, les dextrines au sens de la présente invention sont obtenues à partir d'amidon natif et ne sont soumises à aucune autre modification, notamment chimique, autre que la réaction de dextrinisation. On peut donc également parler de dextrines non modifiées. Ces produits sont bien connus et largement décrits dans la littérature. Leur utilisation en sauce de couchage a déjà fait l'objet d'un certain nombre de demandes de brevet.

La demande de brevet EP 1 281 721 fait état de dextrines issues d'un traitement thermique de l'amidon, et mentionne leur utilisation dans le domaine du papier, plus particulièrement comme agent d'encollage, mais sans aucune problématique technique associée.

La Demande de Brevet Internationale WO 2005 / 047385 décrit des compositions à base de deux amidons modifiés de manière chimique, physique ou enzymatique, et leur utilisation dans le couchage du papier. Il est indiqué que ces amidons peuvent être des dextrines, mais aucune information n'est alors donnée sur la nature et les propriétés de celles-ci.

La Demanderesse a elle-même décrit, dans la Demande de Brevet Internationale WO 2005 / 003456, des compositions à base d'amidon modifié utilisées pour le collage et le couchage du papier et du carton. La rhéologie des sauces et la rétention d'eau sont améliorées par la mise en oeuvre de telles compositions. Si ce document ne mentionne pas le terme de dextrine, il indique clairement une sélection sur la teneur en amylose, celle-ci devant être comprise entre 20 % et 60 %.

Enfin, la Demanderesse indique qu'elle a également décrit, dans les Demandes de Brevet Françaises n° 11 54539 et 12 54540 non encore publiées à la date de dépôt de la présente Demande, des dextrines de masses moléculaires élevées et présentant un indice de polymolécularité important, ainsi que leur utilisation pour le couchage papetier. Aucune référence n'est faite à la teneur en amylopectine de ces produits.

En outre, la Demanderesse précise que les dextrines ayant une teneur élevée en amylopectine (et mises en oeuvre dans la présente Demande) sont bien connues en tant que telles notamment dans des applications alimentaires. On pourra se référer par exemple aux documents JP2009-131184 et JP2004-008147. L'homme du métier ne rencontre donc aucun problème particulier, quant à la fabrication de ces produits.

De manière bien connue de l'homme du métier, la teneur en amylopectine est déterminée par potentiométrie de l'iode absorbé par l'amylose de manière à former un complexe.

Aussi, un premier objet de la présente invention réside dans une sauce de couchage pour papier ou carton, caractérisée en ce qu'elle contient, exprimé en % en poids de chacun de ses constituants par rapport à son poids total :
- de 20 % à 50 %, préférentiellement de 28 % à 50 % d'eau
- de 50 % à 75 %, préférentiellement de 50 % à 64 % d'au moins une matière minérale ou organique,
- de 5 % à 20 %, préférentiellement de 8 % à 12 % d'un liant constitué d'au moins 20 %, préférentiellement d'au moins 80 %, très préférentiellement d'au moins 99 % en poids sec d'une dextrine présentant un taux d'amylopectine supérieur à 95 %,
- de 0 à 5 %, préférentiellement de 0,1 % à 2 % d'au moins un additif choisi parmi un azurant optique, un modificateur de rhéologie, un épaississant, un antimousse, un dispersant, un agent régulateur de pH, un colorant, un lubrifiant, un réticulant.

De manière préférée, cette sauce est aussi caractérisée en ce que ladite dextrine présente un taux d'amylopectine supérieur à 98 %, préférentiellement supérieur à 99 %.

Cette sauce est aussi caractérisée en ce que ladite dextrine présente une masse moléculaire en poids supérieure à 600 000 Da, et préférentiellement 1 000 000 Da, et dans tous les cas inférieure à 2 500 000 Da. La variante où la masse moléculaire en poids est comprise entre 1 000 000 Da et 2 500 000 Da correspond à la variante très préférée de l'invention.

Ces masses moléculaires en poids sont classiquement mesurées par des méthodes de chromatographie par exclusion stérique de type HPSEC-MALLS (« High Performance Size Exclusion Chromatography coupled on-line with Multiple Angle Laser Light Scaterring »). Le protocole de mesure correspondant est indiqué en partie introductive des exemples supportant la présente demande.

La dextrine est préférentiellement préparée à partir d'amidon natif par traitement thermique en phase sèche sous catalyse acide.

Un autre objet de la présente invention, consiste en l'utilisation comme liant, pour la préparation d'une sauce de couchage pour papier ou carton, d'au moins une dextrine caractérisée en ce qu'elle présente un taux d'amylopectine supérieur à 95 %.

Cette utilisation est aussi caractérisée en ce que le liant est constitué d'au moins 20 %, préférentiellement d'au moins 80 %, très préférentiellement d'au moins 99 % en poids sec d'au moins une dextrine présentant un taux d'amylopectine supérieur à 95 %.

Cette utilisation est aussi caractérisée en ce que ladite dextrine présente un taux d'amylopectine supérieur à 98 %, préférentiellement supérieur à 99 %.

Dans une variante préférée, cette utilisation est caractérisée en ce que ladite dextrine présente une masse moléculaire en poids supérieure à 600 000 Da, préférentiellement 1 000 000 Da, et dans tous les cas inférieure à 2 500 000 Da.

Un autre objet de la présente invention consiste en un procédé de couchage d'un papier ou d'un carton, par application sur au moins une des faces dudit carton ou dudit papier d'une sauce de couchage selon l'invention.

Un dernier objet de la présente description consiste en un papier ou un carton dont au moins une des faces a été revêtue à partir d'une sauce de couchage selon la présente invention.

Les exemples qui suivent permettent de mieux appréhender la présente invention, sans pour autant en limiter la portée.

### EXEMPLES

Dans tous les essais qui suivent, les masses moléculaires des amidons et dextrines sont déterminées par chromatographie d'exclusion stérique, selon le protocole suivant :
- préparation d'un échantillon par solubilisation de du produit, en chauffant à 100°C pendant 30 min dans un solvant de dilution constitué d'un mélange DMSO / NaNO₃ (0,1M de NaNO3 dans le DMSO), ledit échantillon pouvant présenter une concentration allant de 2 à 10 mg en produit par mL de solvant de dilution ;
- utilisation d'un appareil de chromatographie liquide à haute performance (CLHP) équipé d'une pompe, fonctionnant en mode isocratique, faisant circuler un solvant d'élution à 0,3mL/mn, d'un réfractomètre, d'un détecteur *laser multiple angle light scattering* de 18 angles chauffé à 35°C, par exemple un détecteur DAWN DSP de la société Wyatt, et d'un four de thermostatisation des colonnes chauffé à 35°C, par exemple équipé de colonnes de polyhydroxyméthacrylate de type SUPREMA et dont le solvant d'élution est par exemple une solution aqueuse de nitrate de sodium à 0,1 M, contenant 0,02 % en masse d'azide de sodium ;
- injection dans l'appareil d'un volume d'échantillon d'environ 100 µL.
- les masses moléculaires moyennes en poids et en nombre peuvent être déterminées à partir des spectres obtenus, par exemple, en retraitant les spectres en exponentiel 1^{er} ordre, à l'aide du logiciel d'analyse de type ASTRA v.4.

### Exemple 1

Cet exemple concerne la préparation de colles contenant un amidon selon l'art antérieur, une dextrine hors invention et une dextrine selon l'invention. Ici, les colles ont été réalisées dans un cuiseur Jet permettant de cuire l'amidon à 140 °C pendant 1 minute 30 secondes.

Le premier est une fécule oxydée de masse moléculaire en poids de l'ordre de 360 000 Da commercialisée par la société AVEBE™ sous la dénomination Perfectamyl™ A2177 (produit n°1). Sa teneur en amylopectine est égale à 22 %.

La deuxième est une dextrine de masse moléculaire en poids de l'ordre de 1 000 000 Da commercialisée par la société ROQUETTE™ sous le nom Stabilys™ A020 (produit n°2). Sa teneur en amylopectine est égale à 24 %.

La troisième est une dextrine de masse moléculaire en poids de l'ordre de 270 000 Da commercialisée par la société ROQUETTE™ sous le nom Stabilys™ A025 (produit n°3). Sa teneur en amylopectine est égale à 24 %.

La quatrième est une dextrine de masse moléculaire en poids de l'ordre de 1 500 000 Da (produit n°4). Sa teneur en amylopectine est de 99,5 %.

On a réalisé 2 colles à extrait sec (ES) variable en amidon ou dextrine (ES = 27 %, 35 %), dont on a mesuré la viscosité Brookfield à 100 tours par minute et à différentes températures, en faisant diminuer celles-ci. Les résultats apparaissent dans les tableaux 1 et 2. On constate que la dextrine selon l'invention (produit n° 4) confère une bien meilleure stabilité à la colle que la dextrine selon l'art antérieur (produit n° 2) et présentant une masse moléculaire en poids comparable. Par ailleurs, et de manière tout à fait surprenante, cette stabilité est comparable à celle obtenue avec la fécule oxydée de bas poids moléculaire (produit n° 1) et à celle obtenue avec la dextrine de l'art antérieur ayant aussi un faible poids moléculaire (produit n°3).

**Tableau 1**

| | ES = 35 % | | | |
|---|---|---|---|---|
| | produit n° 1 | produit n°2 | produit n° 3 | produit n°4 |
| 80°C | 140 | 180 | 120 | 180 |
| 70°C | 160 | 250 | 150 | 220 |
| 60°C | 200 | 430 | 180 | 270 |
| 50°C | 250 | 6500 | 220 | 360 |
| 40°C | 380 | * | 340 | 550 |
| 30°C | 630 | * | 600 | 800 |

| | | | | |
|---|---|---|---|---|
| * non mesurable | | | | |

**Tableau 2**

| | ES = 27 % | | | |
|---|---|---|---|---|
| | produit n° 1 | produit n°2 | produit n° 3 | produit n° 4 |
| 70°C | 90 | 170 | 70 | 110 |
| 60°C | 100 | 290 | 80 | 125 |
| 50°C | 125 | 900 | 110 | 150 |
| 40°C | 150 | 5000 | 140 | 180 |
| 30°C | 200 | 10000 | 160 | 240 |

### Exemple 2

Cet exemple concerne la préparation de sauces de couchage selon l'art antérieur avec mise en oeuvre du produit Perfectamyl™ A2077 (produit n°1) et selon l'invention avec deux dextrines qui sont le produit n° 4 déjà utilisé dans l'exemple précédent, et le produit n° 5, de masses moléculaires en poids respectivement égales à 1 500 000 Da et 700 000 Da, et dont les teneurs en amylopectine sont de 99,5 %.

Chaque sauce est constituée de :
- 80 parts en poids de Nugloss™ (pigment) ;
- 20 parts en poids d'Hydrocarb™ 60 (carbonate de calcium) ;
- 12 parts en poids de liant non synthétique selon l'art antérieur ou selon l'invention ;
- 12 parts en poids d'un latex synthétique de type styrène-butadiène commercialisé par la société BASF™ sous le nom Styronal™ 302 S.

L'extrait sec de ces sauces est fixé à 61 % et leur pH est ajusté à 8,5.
Les sauces A, B et C contiennent respectivement les produits 1, 4 et 5.

Le liant amylacé est introduit sous forme d'une colle. La colle est ici fabriquée dans une cuve ouverte disposant d'une canule, de manière à cuire l'amidon à environ 96 °C pendant 30 minutes.

Pour chaque sauce, on a déterminé, à 25 °C _{:}
- sa viscosité Brookfield à 100 tours par minute ;
- sa rétention d'eau selon la méthode dite Gradek ;
- sa viscosité ACAV à 1 000 000 s⁻¹.

Les résultats figurent dans le tableau 3.

**Tableau 3**

| | sauce A | sauce B | sauce C |
|---|---|---|---|
| viscosité Brookfield (mPa.s) | 1450 | 950 | 520 |
| rétention d'eau Gradek (g/m2) | 69 | 44 | 68 |
| viscosité ACAV à 1 000 000 s⁻¹ (mPa.s) | 61 | 55 | 54 |

On constate que les 2 sauces selon l'invention présentent des valeurs de viscosité Brookfield tout à fait acceptables, même si elles sont inférieures à celle obtenue pour la référence ; par ailleurs, le formulateur saura ajuster ces viscosités notamment par ajout d'un agent épaississant ciblé. De manière tout à fait avantageuse, la viscosité sous haut gradient de cisaillement est diminuée dans le cas de l'invention : ce qui autorise une réduction de la pression de lame, ou une augmentation de la vitesse de couchage. Enfin, de manière particulièrement avantageuse, la sauce B qui correspond à la variante préférée de l'invention (masse moléculaire en poids comprise entre 1 000 000 Da et 2 500 000 Da) présente une rétention d'eau très inférieure à la sauce de référence. On a donc dans ce cas atteint un compromis de propriétés particulièrement intéressant.

### Exemple 3

Dans cet exemple, on réalise une nouvelle formulation de sauce de couchage, par mise en oeuvre de 4 produits :
- le produit n° 6 selon l'art antérieur qui est une fécule de pomme de terre oxydée de masse moléculaire en poids égale à environ 520 000 Da, et ayant une teneur en amylopectine égale à 22 % ;
- le produit n° 3 déjà décrit (Stabilys™ A025) et représentant l'art antérieur ;
- le produit n° 7 représentant l'art antérieur et commercialisé par la société ROQUETTE™ sous la dénomination Stabilys™ A035 de masse moléculaire en poids égale à 120 000 Da, et ayant une teneur en amylopectine égale à 26 % ;
- et un produit selon l'invention (produit n° 8) qui est une dextrine de masse moléculaire en poids égale à environ 1 100 000 Da et ayant une teneur en amylopectine de 99,5 %.

Chaque sauce est constituée de :
- 100 parts en poids d'Hydrocarb™ 60 (carbonate de calcium)
- 5,5 parts en poids d'un latex styrène-butadiène selon l'art antérieur qui est commercialisé par la société POLYMERLATEX™
- 6 parts en poids de liant non synthétique, selon l'art antérieur ou l'invention
- 0,2 part en poids de carboxyméthyl cellulose
- 0,1 part en poids d'un épaississant commercialisé par BASF™ sous le nom Sterocoll™ SL

L'extrait sec de ces sauces est fixé à 68 % et leur pH est ajusté à 9.
Les sauces D, E, F, et G contiennent respectivement les produits 6, 3, 7 et 8.

Pour chaque sauce, on a déterminé, à 25 °C :
- sa viscosité Brookfield à 100 tours par minute
- sa rétention d'eau selon la méthode dite Gradek
- sa viscosité ACAV à 1 000 000 s⁻¹

Les résultats figurent dans le tableau 6.

Comme pour l'exemple 2, on vérifie que la sauce selon l'invention (sauce G) est celle qui aboutit au meilleur compromis entre une viscosité ACAV réduite et une rétention d'eau améliorée, la viscosité Brookfield pouvant être ajustée par le formulateur au moyen d'épaississants bien connus de lui.

**Tableau 4**

| | sauce D | sauce E | sauce F | sauce G |
|---|---|---|---|---|
| viscosité Brookfield (mPa.s) | 1750 | 1750 | 1300 | 1300 |
| rétention d'eau Gradek (g/m2) | 25 | 35 | 51 | 18 |
| viscosité ACAV à 1 000 000 s⁻¹ (mPa.s) | 69 | 63 | 61 | 62 |

## Revendications

1. Sauce de couchage pour papier ou carton, **caractérisée en ce qu'**elle contient, exprimé en % en poids de chacun de ses constituants par rapport à son poids total :
- de 20 % à 50 % d'eau,
- de 50 % à 75 % d'au moins une matière minérale ou organique,
- de 5 % à 20 % d'un liant constitué d'au moins 20 % d'une dextrine présentant un taux d'amylopectine supérieur à 95 %,
- de 0 à 5 % d'au moins un additif choisi parmi un azurant optique, un modificateur de rhéologie, un épaississant, un antimousse, un dispersant, un agent régulateur de pH, un colorant, un lubrifiant, un réticulant.

2. Sauce de couchage pour papier ou carton, **caractérisée en ce qu'**elle contient, exprimé en % en poids de chacun de ses constituants par rapport à son poids total :
- de 28 % à 50 % d'eau,
- de 50 % à 64 % d'au moins une matière minérale ou organique,
- de 8 % à 12 % d'un liant constitué d'au moins 20 %, préférentiellement d'au moins 80 %, très préférentiellement d'au moins 99 %, en poids sec d'une dextrine présentant un taux d'amylopectine supérieur à 95 %,
- de 0,1 % à 2 % d'au moins un additif choisi parmi un azurant optique, un modificateur de rhéologie, un épaississant, un antimousse, un dispersant, un agent régulateur de pH, un colorant, un lubrifiant, un réticulant.

3. Sauce de couchage selon l'une des revendications 1 ou 2, **caractérisée en ce que** le liant est constitué d'au moins 80 %, préférentiellement d'au moins 99 % en poids sec d'une dextrine présentant un taux d'amylopectine supérieur à 95 %.

4. Sauce de couchage selon une des revendications 1 à 3, **caractérisée en ce que** ladite dextrine présente un taux d'amylopectine supérieur à 98 %, préférentiellement supérieur à 99 %.

5. Sauce de couchage selon l'une quelconque des revendications 1 à 4, **caractérisée en ce que** ladite dextrine présente une masse moléculaire en poids supérieure à 600 000 Da, préférentiellement 1 000 000 Da, et dans tous les cas inférieure à 2 500 000 Da.

6. Utilisation comme liant, pour la préparation d'une sauce de couchage pour papier ou carton, d'au moins une dextrine **caractérisée en ce qu'**elle présente un taux d'amylopectine supérieur à 95 %.

7. Utilisation selon la revendication 6, **caractérisée en ce que** le liant est constitué d'au moins 20 %, préférentiellement d'au moins 80 %, très préférentiellement d'au moins 99 % en poids sec d'au moins une dextrine présentant un taux d'amylopectine supérieur à 95 %.

8. Utilisation selon l'une des revendications 6 ou 7, **caractérisée en ce que** ladite dextrine présente un taux d'amylopectine supérieur à 98 %, préférentiellement supérieur à 99 %.

9. Utilisation selon l'une quelconque des revendications 6 à 8, **caractérisée en ce que** ladite dextrine présente une masse moléculaire en poids supérieure à 600 000 Da, préférentiellement 1 000 000 Da, et dans tous les cas inférieure à 2 500 000 Da.

10. Procédé de couchage d'un papier ou d'un carton, par application sur au moins une des faces dudit carton ou dudit papier d'une sauce de couchage selon l'une quelconque des revendications 1 à 5.

## Patentansprüche

1. Papier-oder Kartonstreichmasse, **dadurch gekennzeichnet, dass** sie in Gewichtsprozent für jeden ihrer Bestandteile im Verhältnis zu ihrem Gesamtgewicht umfasst:
- 20 bis 50% Wasser
- 50 bis 75% wenigstens einer mineralischen oder organischen Substanz
- 5 bis 20% Bindemittel, welches wenigstens 20% Dextrin mit einem Amylopektingehalt größer 95% umfasst,
- 0 bis 5% wenigstens eines Zusatzstoffes, gewählt aus optischem Aufheller, Rheologie-Modifizierer, Dickungsmittel, Entschäumer, Dispergiermittel, pH-Regulator, Farbstoff, Schmiermittel, Vernetzungsmittel.

2. Papier-oder Kartonstreichmasse, **dadurch gekennzeichnet, dass** sie in Gewichtsprozent für jeden ihrer Bestandteile im Verhältnis zu ihrem Gesamtgewicht umfasst:
- 28 bis 50% Wasser,
- 50 bis 64% wenigstens einer mineralischen oder organischen Substanz
- 8 bis 12% Bindemittel, welches wenigstens 20%, bevorzugt wenigstens 80%, stärker bevorzugt wenigstens 99% Trockenmasse Dextrin mit einem Amylopektingehalt größer 95% umfasst,
- 0,1 bis 2% wenigstens eines Zusatzstoffes, gewählt aus optischem Aufheller, Rheologie-Modifizierer, Dickungsmittel, Entschäumer, Dispergiermittel, pH-Regulator, Farbstoff, Schmiermittel, Vernetzungsmittel.

3. Streichmasse nach einem der Ansprüche 1 oder 2, **dadurch gekennzeichnet, dass** das Bindemittel wenigstens 80%, bevorzugt wenigstens 99 % Trockenmasse Dextrin mit einem Amylopektingehalt größer 95% umfasst.

4. Streichmasse nach einem der Ansprüche 1 bis 3, **dadurch gekennzeichnet, dass** das Dextrin einen Amylopektingehalt größer 98%, bevorzugt größer 99% aufweist.

5. Streichmasse nach einem der Ansprüche 1 bis 4, **dadurch gekennzeichnet, dass** das Dextrin ein Molekulargewicht größer 600 000 Da, bevorzugt 1 000 000 Da und in jedem Fall kleiner 2 500 000 Da aufweist.

6. Verwendung als Bindemittel zur Zubereitung einer Papier- oder Kartonstreichmasse wenigstens eines Dextrins, **dadurch gekennzeichnet, dass** dieses einen Amylopektingehalt größer 95% aufweist.

7. Verwendung nach Anspruch 6, **dadurch gekennzeichnet, dass** das Bindemittel wenigstens 20%, bevorzugt wenigstens 80%, stärker bevorzugt wenigstens 99% Trockenmasse wenigstens eines Dextrins mit einem Amylopektingehalt größer 95% umfasst.

8. Verwendung nach einem der Ansprüche 6 oder 7, **dadurch gekennzeichnet, dass** das Dextrin einen Amylopektingehalt größer 98%, bevorzugt größer 99% aufweist.

9. Verwendung nach einem der Ansprüche 6 bis 8, **dadurch gekennzeichnet, dass** das Dextrin ein Molekulargewicht größer 600 000 Da, bevorzugt 1 000 000 Da und in jedem Fall kleiner 2 500 000 Da aufweist.

10. Papier- oder Kartonstreichverfahren, durch Anwendung einer Streichmasse nach einem der Ansprüche 1 bis 5 auf wenigstens einer Seite des Kartons oder des Papiers.

## Claims

1. A coating color for paper or cardboard, **characterized in that** it comprises, expressed as % by weight of each of its constituents with respect to its total weight:
- from 20% to 50% of water,
- from 50% to 75% of at least one inorganic or organic material,
- from 5% to 20% of a binder composed of at least one dextrin exhibiting an amylopectin content of greater than 95%,
- from 0% to 5% of at least one additive chosen from an optical brightener, a rheology modifier, a thickener, an antifoaming agent, a dispersant, a pH-regulating agent, a colorant, a lubricant, a crosslinking agent.

2. A coating color for paper or cardboard, **characterized in that** it comprises, expressed as % by weight of each of its constituents with respect to its total weight:
- from 28% to 50% of water,
- from 50% to 64% of at least one inorganic or organic material,
- from 8% to 12% of a binder composed of at least one dextrin exhibiting an amylopectin content of greater than 95%,
- from 0.1% to 2% of at least one additive chosen from an optical brightener, a rheology modifier, a thickener, an antifoaming agent, a dispersant, a pH-regulating agent, a colorant, a lubricant, a crosslinking agent.

3. The coating color as claimed in either of claims 1 and 2, **characterized in that** the binder is composed of at least 80%, preferably of at least 99%, by dry weight of a dextrin exhibiting an amylopectin content of greater than 95%.

4. The coating color as claimed in one of claims 1 to 3, **characterized in that** said dextrin exhibits an amylopectin content of greater than 98%, preferably of greater than 99%.

5. The coating color as claimed in any one of claims 1 to 4, **characterized in that** said dextrin exhibits a weight-average molecular weight of greater than 600 000 Da, preferably 1 000 000 Da, and in all cases less than 2 500 000 Da.

6. The use as binder, for the preparation of a coating color for paper or cardboard, of at least one dextrin **characterized in that** it exhibits an amylopectin content of greater than 95%.

7. The use as claimed in claim 6, **characterized in that** the binder is composed of at least 20%, preferably of at least 80%, very preferably of at least 99%, by dry weight of at least one dextrin exhibiting an amylopectin content of greater than 95%.

8. The use as claimed in either of claims 6 and 7, **characterized in that** said dextrin exhibits an amylopectin content of greater than 98%, preferably of greater than 99%.

9. The use as claimed in any one of claims 6 to 8, **characterized in that** said dextrin exhibits a weight-average molecular weight of greater than 600 000 Da, preferably 1 000 000 Da, and in all cases less than 2 500 000 Da.

10. A process for coating a paper or a cardboard by application, to at least one of the faces of said cardboard or of said paper, of a coating color as claimed in any one of claims 1 to 5.
